# FASCICULE DE BREVET EUROPEEN

(11) **EP 2 394 025 B1**
(45) Date de publication et mention de la délivrance du brevet: **29.07.2015**
(21) Numéro de dépôt: 09756535.2
(22) Date de dépôt: 21.10.2009
(51) Int. Cl.: F01D 5/14, F04D 29/44, F23R 3/04

(54) **ENSEMBLE DIFFUSEUR-REDRESSEUR POUR UNE TURBOMACHINE**
DIFFUSOR-/GLEICHRICHTER-ANORDNUNG FÜR EINEN TURBOMOTOR
DIFFUSER/RECTIFIER ASSEMBLY FOR A TURBINE ENGINE

(30) Priorité: 05.02.2009 FR 0900494
(43) Date de publication de la demande: 14.12.2011
(73) Titulaire: Snecma, 75015 Paris (FR)
(72) Inventeur: LOMBARD, Jean-Pierre, François, 77550 Moissy Cramayel Cedex (FR); MERCIER, Eric, 77550 Moissy Cramayel Cedex (FR); RIBASSIN, François Pierre, Georges, Maurice, 77550 Moissy Cramayel Cedex (FR)
(74) Mandataire: Ramey, Daniel
(86) Numéro de dépôt international: PCT/FR2009/001230
(87) Numéro de publication internationale: WO 2010/089466

(56) Documents cités:
- EP-A- 1 995 410
- GB-A- 2 281 356
- US-A- 3 079 068
- US-A- 3 719 430
- US-A- 4 117 671
- US-A- 4 677 828
- US-A1- 2008 145 213

## Description

L'invention concerne un ensemble diffuseur-redresseur destiné à l'alimentation en air d'une chambre annulaire de combustion dans une turbomachine telle qu'un turboréacteur ou un turbopropulseur d'avion ou un moteur d'hélicoptère.

Dans une réalisation classique, une turbomachine comprend une chambre annulaire de combustion alimentée en air par un compresseur haute pression agencé en amont. La sortie du compresseur est reliée par un diffuseur axial ou radial raccordé à un redresseur comportant des aubes sensiblement radiales à l'entrée de la chambre de combustion montée dans une enceinte annulaire délimitée extérieurement par un carter externe. Le carburant est amené par des injecteurs régulièrement répartis sur le fond annulaire de la chambre et qui sont portés par le carter externe.

Les performances de la chambre de combustion sont largement dépendantes des performances du système d'injection, celui-ci contribuant à l'atomisation du carburant, c'est-à-dire à sa dispersion sous forme de fines gouttelettes, et permettant de stabiliser la combustion du carburant grâce à la formation d'une zone de recirculation. L'atomisation du carburant est favorisée par une perte de charge importante de l'air dans le système d'injection, et le contrôle de la zone de recirculation est favorisé par une alimentation en air uniforme du système d'injection.

Ces critères sont difficiles à respecter quand la sortie du compresseur comprend un ensemble diffuseur-redresseur de type axial ou de type centrifuge, c'est-à-dire à diffuseur radial et redresseur annulaire.

En sortie du redresseur, on observe que le nombre de Mach est plus faible sensiblement dans le prolongement aval des aubes qu'entre les aubes. L'écoulement d'air en sortie du redresseur présente ainsi des hétérogénéités circonférentielles du nombre de Mach, ce qui conduit à un nombre de Mach efficace différent de celui correspondant à un écoulement homogène. Il en résulte des pertes de charges élevées pour l'alimentation du système d'injection et des distorsions d'alimentation de ce système qui risquent d'affecter la stabilité de la combustion.

Afin de minimiser l'impact des hétérogénéités circonférentielles de vitesse de l'air en sortie du redresseur, il est connu de contrôler la distance entre les bords de fuite des aubes du redresseur et l'amont du système d'injection en fonction de l'orientation du flux d'air.

Le document US 2008/0145213 A1 divulgue un diffuseur-redresseur dans lequel les parois sensiblement cylindriques du redresseur sont prolongées en aval des aubes radiales du redresseur.

Dans la demande FR 0801063 de la demanderesse, on a proposé de former une section évasée en aval des aubes du redresseur pour diminuer le nombre de Mach moyen et réduire les hétérogénéités circonférentielles du nombre de Mach dans le flux d'air en entrée de la chambre de combustion.

Cependant, ces moyens connus ne permettent pas d'apporter une solution satisfaisante au problème de la diminution du nombre de Mach dans le sillage des aubes du redresseur.

L'invention à notamment pour but d'apporter une solution simple, économique et efficace à ce problème.

Elle propose à cet effet, un ensemble diffuseur-redresseur destiné à être monté en sortie d'un compresseur dans une turbomachine, comprenant un redresseur comportant deux parois sensiblement cylindriques radialement interne et externe reliées par des aubes radiales, caractérisé en ce que les parois du redresseur sont prolongées vers l'aval au-delà des aubes radiales et leur écartement radial est variable circonférentiellement en aval des aubes de façon à être minimal sensiblement dans le prolongement des aubes et maximal entre les aubes.

La réalisation d'un écartement radial minimal entre les parois interne et externe du redresseur dans le prolongement aval des aubes permet d'accélérer localement le flux d'air dans le sillage des aubes comparativement au flux d'air passant entre les aubes. La différence de vitesse de l'air dans le prolongement aval des aubes et entre les aubes est ainsi diminuée, ce qui permet de réduire les hétérogénéités circonférentielles de vitesse de l'air en sortie du redresseur. Le flux d'air alimentant le système d'injection est ainsi plus uniforme, ce qui permet de bien contrôler la formation de la zone de recirculation afin d'assurer la stabilisation de la combustion et de diminuer la perte de charge de l'alimentation du système d'injection.

Cette amélioration de l'uniformité de l'alimentation du système d'injection permet de réduire la distance entre les aubes du redresseur et le système d'injection, ce qui se traduit par une réduction de la masse de la turbomachine.

Selon une autre caractéristique de l'invention, l'écartement radial en aval des aubes est variable circonférentiellement jusqu'à l'extrémité aval des parois aval du redresseur, ce qui permet de réduire encore les hétérogénéités circonférentielles de vitesse du flux d'air en sortie du redresseur.

Les parois du redresseur peuvent être divergentes en aval des aubes, ce qui permet de diminuer le nombre de Mach moyen et donc de réduire encore les hétérogénéités dans le flux d'air alimentant le système d'injection.

Selon une autre caractéristique de l'invention, au moins une des parois du redresseur est ondulée ou crénelée en aval des aubes.

Dans une variante de l'invention, les deux parois du redresseur peuvent être ondulées ou crénelées en aval des aubes.

Les ondulations de la partie aval de la ou des parois du redresseur peuvent être symétriques ou dissymétriques par rapport à des plans radiaux prolongeant les aubes.

Dans le cas où les parois sont dissymétriques, les ondulations peuvent s'étendre de façon hélicoïdale autour de l'axe du compresseur selon un angle d'hélice correspondant à l'angle de la giration résiduelle du flux d'air en sortie des aubes du redresseur. Lorsque le flux d'air en sortie des aubes présente un décollement par rapport aux parois des aubes du redresseur, l'angle d'hélice peut correspondre à l'angle de décollement du flux d'air, l'écartement radial entre les parois aval du redresseur étant minimal dans cette direction.

Les ondulations des parties aval des parois du redresseur sont par exemple sinusoïdales, en créneaux, en arc de cercle, ou en V.

Les ondulations des parties aval des parois du redresseur peuvent être identiques ou du même type pour les deux parois, ou d'un type différent d'une paroi à l'autre.

Le redresseur peut être monobloc ou bien réalisé par soudage ou mécano-brasage.

L'invention concerne également une turbomachine, telle qu'un turboréacteur ou un turbopropulseur ou un moteur d'hélicoptère, caractérisée en ce qu'elle comprend un ensemble diffuseur-redresseur du type décrit précédemment.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique en coupe axiale d'un ensemble diffuseur-redresseur centrifuge et d'une chambre de combustion dans une turbomachine selon la technique antérieure ;
- la figure 2 est une vue schématique en perspective d'un ensemble diffuseur-redresseur selon un premier mode de réalisation de l'invention ;
- les figures 3 à 13 sont des vues schématiques en perspective ou de bout de différents modes de réalisation de l'invention.

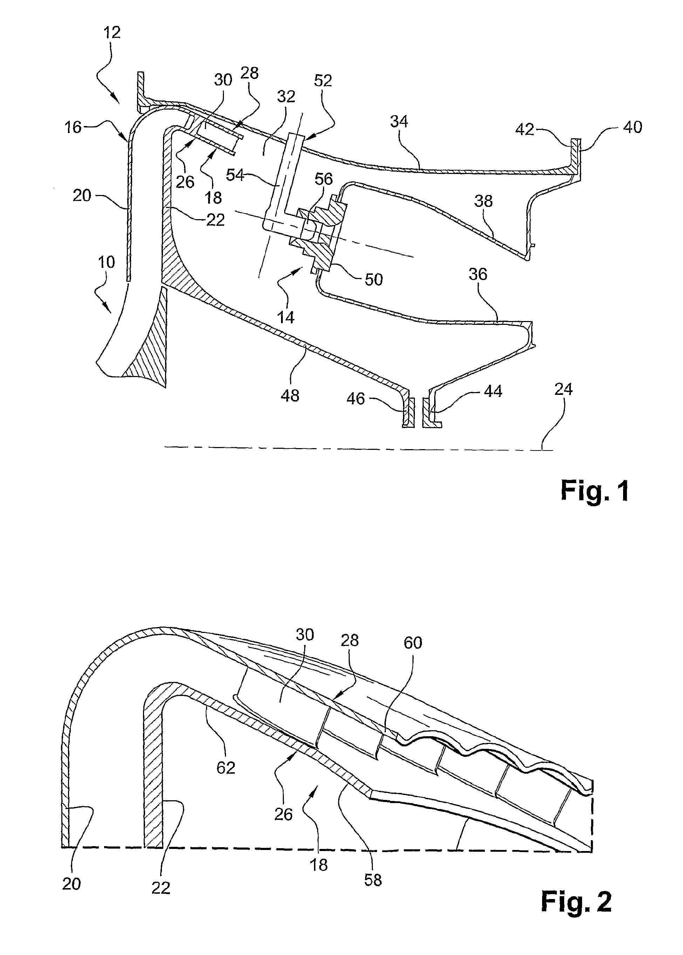

On se réfère d'abord à la figure 1 qui représente une partie d'une turbomachine, telle qu'un turboréacteur ou un turbopropulseur d'avion ou un moteur d'hélicoptère, comportant d'amont en aval, dans le sens de l'écoulement des gaz à l'intérieur de la turbomachine, la sortie d'un étage centrifuge de compresseur 10, un ensemble diffuseur-redresseur 12 coudé en L et une chambre annulaire de combustion 14.

L'ensemble diffuseur-redresseur 12 comprend une partie annulaire amont sensiblement radiale 16 qui forme le diffuseur, reliée à sa périphérie externe à une partie annulaire aval tronconique ou cylindrique qui forme le redresseur 18.

Le diffuseur 16 comporte une paroi annulaire amont 20 et une paroi annulaire aval 22, qui sont parallèles et s'étendent radialement autour de l'axe de rotation 24 de la turbomachine.

Le redresseur comprend deux parois tronconiques sensiblement parallèles interne 26 et externe 28 convergentes vers l'aval et qui sont reliées entre elles par une pluralité d'aubes 30 sensiblement radiales régulièrement réparties autour de l'axe 24 de la turbomachine.

L'entrée du diffuseur 16 est radialement alignée avec la sortie du dernier étage 10 du compresseur haute pression et la sortie du redresseur 18 alimente en air une enceinte annulaire 32 délimitée extérieurement par un carter externe 34 et contenant la chambre de combustion 14. Cette chambre 14 a une forme générale annulaire et comporte deux parois de révolution coaxiales 36, 38 s'étendant l'une à l'intérieur de l'autre.

La paroi de révolution externe 38 de la chambre comprend à son extrémité aval une bride annulaire 40 radialement externe de fixation à une bride annulaire 42 du carter externe 34. La paroi de révolution interne 36 de la chambre 14 comprend à son extrémité aval une bride annulaire 44 radialement interne de fixation à une bride annulaire 46 prévue à l'extrémité aval d'un voile annulaire aval 48 de support de l'ensemble diffuseur-redresseur 12. L'extrémité amont du voile 48 est raccordée à la paroi annulaire aval 22 du diffuseur 16.

Le fond annulaire de la chambre 14 comporte des orifices de montage de moyens d'injection 50 d'un mélange d'air et de carburant à l'intérieur de la chambre 14, l'air provenant de l'ensemble diffuseur-redresseur 12 et le carburant étant amené par des injecteurs 52 fixés au carter externe 34 et régulièrement répartis autour de l'axe 24 de la turbomachine.

Chaque injecteur 52 comprend un conduit 54 qui s'étend vers l'intérieur depuis le carter externe 34 et qui est raccordé à une tête d'injection 56 qui s'étend vers l'aval dans un système d'injection 50.

L'écoulement d'air sortant du redresseur présente des hétérogénéités circonférentielles de vitesse dues à une diminution du nombre de Mach dans le sillage des aubes 30. Ces hétérogénéités génèrent des pertes de charge localisées dans le sillage aval des aubes et ne permettent pas une alimentation uniforme du système d'injection et pénalisent la stabilité de la combustion.

L'invention permet d'uniformiser l'écoulement d'air en aval des aubes 30 du redresseur 18 grâce à des parois aval interne et externe du redresseur 18 en aval des aubes 30 dont l'écartement radial est variable circonférentiellement de manière à être minimal sensiblement dans le prolongement aval des aubes 30 et maximal entre les aubes 30. Cet écartement radial est variable circonférentiellement depuis les bords de fuite des aubes jusqu'à l'extrémité aval des parois aval interne et externe du redresseur.

Comme représenté à la figure 2, les parois interne 26 et externe 28 sont prolongées en aval des aubes 30 par des parois aval interne 58 et externe 60, respectivement. La paroi aval externe 60 est ondulée avec des ondulations en arc de cercle dont la concavité est tournée vers l'axe de la turbomachine. La paroi aval interne 58 du redresseur 18 est inclinée vers l'intérieur et divergente par rapport à la paroi aval externe 60 du redresseur 18.

Le nombre d'arcs de cercle de la paroi aval externe 60 est égal au nombre d'aubes radiales 30 du redresseur 18. Les arcs de cercle sont formées de manière à ce que la partie médiane de chaque arc de cercle soit située au milieu entre les aubes et que ses extrémités circonférentielles soient situées dans le prolongement aval des aubes 30. De cette manière, l'écartement radial entre la paroi aval interne 58 et la paroi aval externe 60 est minimal dans le prolongement aval des aubes 30, c'est-à-dire dans leur sillage, et maximal entre les aubes 30.

De plus, l'amplitude des ondulations de la paroi aval externe 60 augmente depuis le bord de fuite des aubes 30 jusqu'en sortie du redresseur 18.

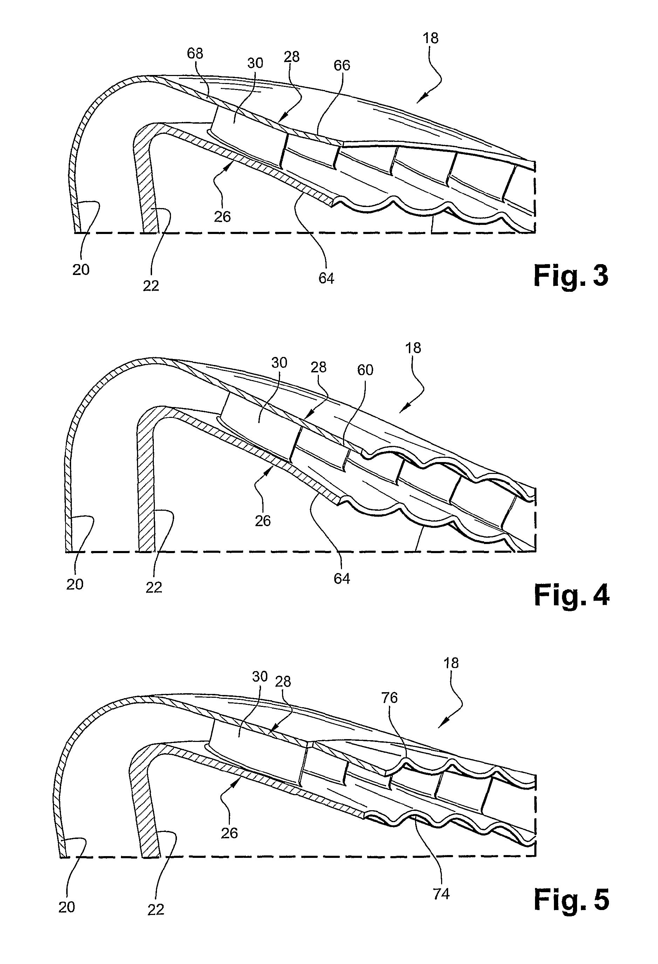

Dans un autre mode de réalisation représentée à la figure 3, la paroi aval interne 64 du redresseur 18 comprend des ondulations en arc de cercle et la partie aval externe 66 diverge radialement vers l'extérieur par rapport à la paroi aval interne 64 du redresseur 18. Afin de garantir un écartement radial minimal dans le prolongement aval des aubes 30, les ondulations en arc de cercle ont une concavité tournée radialement vers l'extérieur.

Les figures 4 et 5 représentent deux autres modes de réalisation de l'invention dans lesquels les parois aval interne et externe du redresseur 18 comprennent des ondulations qui sont de même type et en arc de cercle. Le mode de réalisation de la figure 4 correspond à la combinaison de la paroi aval externe 60 du redresseur 18 de la figure 2 avec la paroi aval interne 64 du redresseur 18 de la figure 3. En figure 5, les concavités des ondulations des parois aval interne 74 et externe 76 sont tournées radialement vers l'intérieur et vers l'extérieur, respectivement. La partie médiane de chaque arc de cercle est située dans le prolongement aval des aubes 30 tandis que les extrémités de chaque arc de cercle sont situées au milieu entre les aubes 30, afin de garantir un écartement radial minimal entre les parois aval 74, 76 du redresseur 18 dans le sillage des aubes 30.

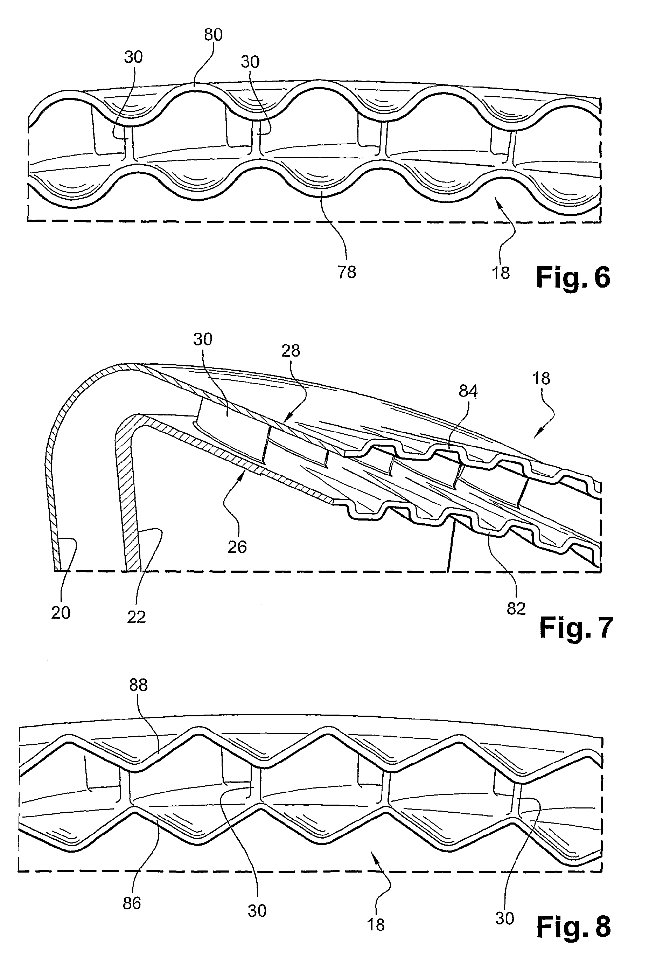

Les figures 6 à 8 représentent d'autres modes de réalisations possibles de l'invention. En figure 6, les parois aval interne et externe 78, 80 du redresseur 18 sont sinusoïdales. En figure 7, les parois aval 82, 84 du redresseur 18 sont crénelées et en figure 8 les parois aval 86, 88 sont formées par une succession de V reliés les uns aux autres.

Dans les modes de réalisation des figures 5 à 8, les parois aval interne et externe du redresseur 18 sont symétriques par rapport à une surface de révolution située à mi-distance entre ces parois aval du redresseur.

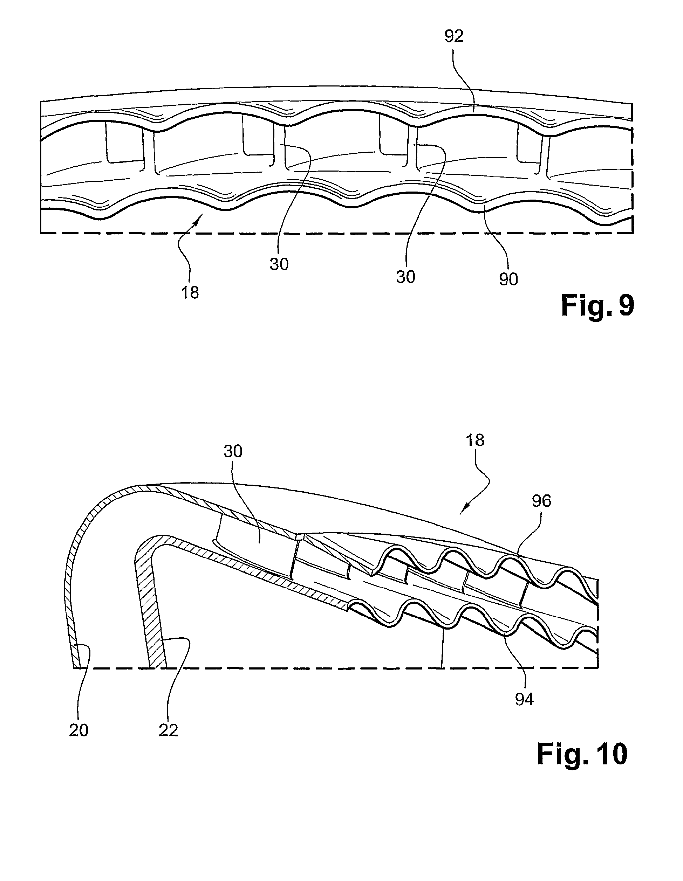

Il est toutefois possible comme en figure 9 d'avoir des parois aval interne 90 et externe 92 du redresseur 18 qui ne sont pas symétriques l'une par rapport à l'autre. Comme représenté, les parois aval interne 90 et externe 92 comprennent des ondulations en arc de cercle dont les concavités sont tournées vers l'intérieur. Pour que l'écartement radial entre les parois aval interne 90 et externe 92 soit minimal dans le prolongement aval des aubes 30, la paroi aval interne 90 du redresseur est décalée angulairement par rapport à la paroi aval externe 92 du redresseur 18 d'un angle égal à la moitié de l'étendue angulaire d'un arc de cercle. Ainsi, les extrémités des arcs de cercle de la paroi aval interne 90 sont au milieu entre les aubes 30, et les extrémités des arcs de cercle de la paroi aval externe 92 sont dans le prolongement aval des aubes 30.

La réalisation d'un écartement radial variable entre les parois aval interne et externe du redresseur 18 permet d'accélérer localement le flux d'air dans le sillage des aubes 30 pour compenser le déficit de vitesse due à la présence des aubes. L'alimentation en air du système d'injection est ainsi uniformisée, ce qui assure une bonne atomisation du carburant, favorise la stabilité de la combustion et limite l'émission de composés polluants.

Dans les modes de réalisation décrits précédemment, les parois aval interne et externe ondulées ou crénelées du redresseur sont symétriques par rapport à des plans radiaux prolongeant les aubes vers l'aval ou passant au milieu entre les aubes.

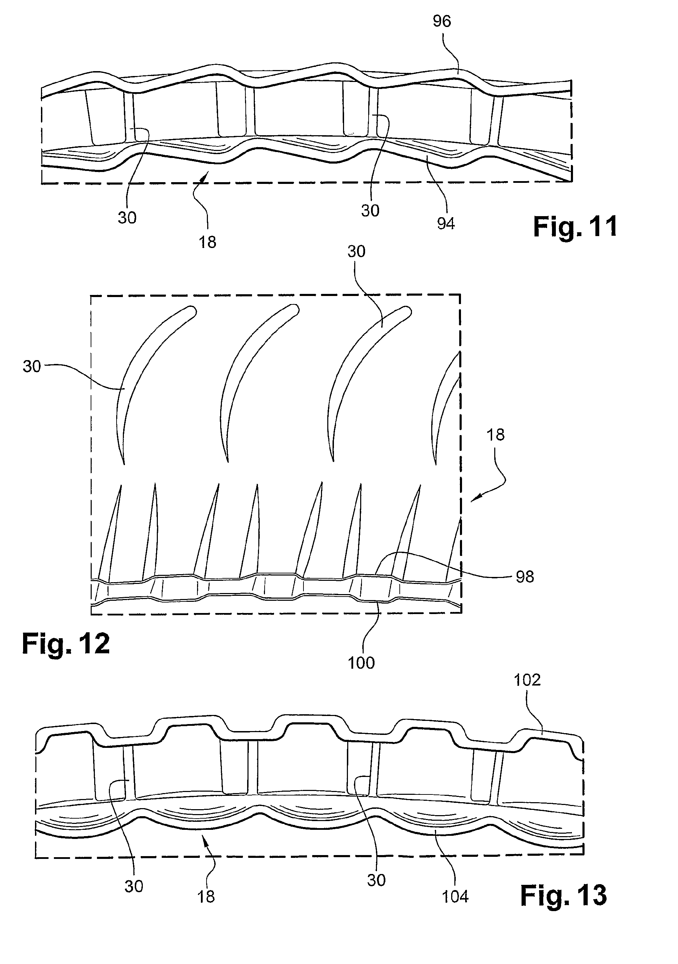

Dans certains cas, le flux d'air sortant du redresseur comprend une composante de giration, de sorte que l'air s'écoule selon une direction faisant un angle avec l'axe de la turbomachine. Il est possible de mieux guider le flux d'air en sortie du redresseur en réalisant des parois aval ondulées ou crénelées qui sont dissymétriques par rapport à des plans radiaux prolongeant les aubes vers l'aval (figures 10 à 12). La figure 10 représente des parois aval interne et externe 94, 96 du redresseur ondulées qui sont dissymétriques par rapport aux plans radiaux précités. Dans la variante de la figure 11, les ondulations des parois aval interne et externe 94, 96 sont formées par une succession de V dissymétriques reliés les uns aux autres. Chaque partie en V est formée par une première branche raccordée au sommet du V à une deuxième branche plus courte que la première branche. Les extrémités de chaque portion en V sont raccordées dans la zone de prolongement aval des aubes du redresseur et les sommets de chaque partie en V des parois aval interne et externe sont orientés radialement vers l'intérieur et vers l'extérieur, respectivement.

Ces configurations permettent de localiser le maximum d'écartement radial entre les parois aval interne et externe du redresseur de manière à ce qu'il ne soit pas situé au milieu de l'espacement inter-aubes dans la partie aval du redresseur mais soit décalé circonférentiellement par rapport à cette position milieu, le minimum d'écartement radial restant situé dans le prolongement aval des aubes.

Dans la variante de réalisation de la figure 12 les ondulations ou parties crénelées 98, 100 des parois aval du redresseur s'étendent de façon hélicoïdale autour de l'axe du compresseur avec un angle d'hélice correspondant à l'angle de la giration résiduelle en sortie des aubes 30 du redresseur 18.

Lorsque le flux d'air en sortie des aubes présente un décollement par rapport aux parois des aubes du redresseur, l'angle d'hélice peut correspondre à l'angle de décollement du flux d'air, l'écartement radial entre les parois aval du redresseur étant minimal dans cette direction.

De nombreuses variantes de l'invention sont possibles et en particulier il est possible de combiner des parois aval interne et externe qui sont du même type, c'est-à-dire en créneaux, en arcs de cercle, en V ou sinusoïdales comme représenté aux dessins ou bien de combiner des parois aval interne et externe qui sont de type différent, par exemple une paroi aval externe en créneaux 102 avec une paroi aval interne 104 en arc de cercle (figure 13).

Dans les modes de réalisation des figures 2 et 3, la paroi aval externe 60 ou interne 64 dépourvue d'ondulations peut s'étendre dans le prolongement de la paroi amont interne 62 ou externe 68 du redresseur 18, respectivement, sans être inclinée par rapport à celle-ci.

Les parois aval interne et externe peuvent être formées d'une seule pièce avec les parois amont interne et externe du redresseur 18 ou bien être soudées ou mécano-brasées sur ces mêmes parois amont.

Dans un exemple particulier de réalisation d'un ensemble diffuseur-redresseur selon l'invention, la longueur des parois aval du redresseur 18 peut atteindre environ 50 millimètres.

Bien que la description ci-dessus a été effectuée en référence à un ensemble diffuseur-redresseur centrifuge, l'invention peut également être utilisée sur un ensemble diffuseur-redresseur dans lequel le diffuseur est axial et agencé en sortie d'un dernier étage de compression également axial.

Il est possible de réaliser un calcul ou une mesure tridimensionnelle de l'écoulement d'air en sortie des aubes du redresseur, afin d'adapter spécifiquement la forme tridimensionnelle des parois aval interne et externe du redresseur ainsi que leur positionnement en aval des aubes à l'écoulement d'air.

Dans certaines réalisations telles que celles des figures 5 à 13, l'écartement radial entre les parois aval interne et externe du redresseur est constant dans le prolongement aval des aubes jusqu'à l'extrémité aval des parois aval du redresseur tandis que dans la partie située entre deux aubes consécutives, l'écartement radial augmente progressivement jusqu'à l'extrémité aval des parois aval du redresseur.

## Revendications

1. Ensemble diffuseur-redresseur (12) destiné à être monté en sortie d'un compresseur dans une turbomachine, comprenant un redresseur (18) comportant deux parois sensiblement cylindriques radialement interne (26) et externe (28) reliées par des aubes radiales (30), les parois du redresseur étant prolongées vers l'aval au-delà des aubes radiales (30), l'ensemble diffuseur-redresseur étant **caractérisé en ce que** l'écartement radial des parois du redresseur est variable circonférentiellement en aval des aubes (30) de façon à être minimal sensiblement dans le prolongement des aubes (30) et maximal entre les aubes (30), l'écartement radial étant variable circonférentiellement jusqu'à l'extrémité aval des parois aval du redresseur.

2. Ensemble diffuseur-redresseur selon la revendication 1, **caractérisé en ce que** les parois du redresseur (58, 60) sont divergentes en aval des aubes (30).

3. Ensemble diffuseur-redresseur selon la revendication 1 ou 2, **caractérisé en ce qu'**au moins une des parois du redresseur est ondulée (60) ou crénelée (84, 82) en aval des aubes (30).

4. Ensemble diffuseur-redresseur selon la revendication 1, 2 ou 3, **caractérisé en ce que** les deux parois du redresseur sont ondulées (60, 64, 74, 76) ou crénelées (82, 84) en aval des aubes (30).

5. Ensemble diffuseur-redresseur selon la revendication 3 ou 4, **caractérisé en ce que** les ondulations de la partie aval de la ou des parois du redresseur (18) sont symétriques par rapport à des plans radiaux prolongeant les aubes (30).

6. Ensemble diffuseur-redresseur selon la revendication 3 ou 4, **caractérisé en ce que** les ondulations de la partie aval de la ou des parois du redresseur (18) sont dissymétriques par rapport à des plans radiaux prolongeant les aubes (30).

7. Ensemble diffuseur-redresseur selon la revendication 6, **caractérisé en ce que** les ondulations s'étendent de façon hélicoïdale autour de l'axe du compresseur avec un angle d'hélice correspondant à un angle de giration résiduelle ou de décollement du flux d'air en sortie des aubes du redresseur.

8. Ensemble diffuseur-redresseur selon l'une des revendications 3 à 7, caractérisé en ce les ondulations des parties aval des parois du redresseur (18) sont sinusoïdales, en créneaux, en arc de cercle, ou en V.

9. Ensemble diffuseur-redresseur selon l'une des revendications 3 à 8, **caractérisé en ce que** les ondulations des parois aval du redresseur sont identiques (60, 64) ou du même type pour les deux parois, ou d'un type différent d'une paroi à l'autre.

10. Ensemble diffuseur-redresseur selon l'une des revendications précédentes, **caractérisé en ce que** le redresseur est monobloc ou réalisé par soudage ou mécano-brasage.

11. Turbomachine, telle qu'un turboréacteur, un turbopropulseur ou un moteur hélicoptère, **caractérisée en ce qu'**elle comprend un ensemble diffuseur-redresseur selon l'une des revendications 1 à 10.

## Patentansprüche

1. Diffusor-Gleichrichter-Anordnung (12), die dazu bestimmt ist, am Auslass eines Kompressors bei einer Turbomaschine bzw. einem Turbotriebwerk montiert zu werden, enthaltend einen Gleichrichter (18) mit zwei im Wesentlichen zylindrischen Wänden, nämlich eine radial innere (26) und eine radial äußere (28), die über radial verlaufende Schaufeln (30) verbunden sind, wobei die Wände des Gleichrichters in Richtung stromabwärts über die radialen Schaufeln (30) hinaus verlängert sind, wobei die Diffusor-Gleichrichter-Anordnung **dadurch gekennzeichnet ist, dass** der radiale Abstand der Wände des Gleichrichters stromabwärts der Schaufeln (30) im Umfang variierbar ist, so dass er im Wesentlichen in der Verlängerung der Schaufeln (30) minimal und zwischen den Schaufeln (30) maximal ist, wobei der radiale Abstand bis zum stromabwärtigen Ende der stromabwärtigen Wände des Gleichrichters im Umfang variierbar ist.

2. Diffusor-Gleichrichter-Anordnung nach Anspruch 1, **dadurch gekennzeichnet ist, dass** die Wände des Gleichrichters (58, 60) stromabwärts der Schaufeln (30) divergieren.

3. Diffusor-Gleichrichter-Anordnung nach Anspruch 1 oder 2, **dadurch gekennzeichnet, dass** zumindest eine der Wände des Gleichrichters stromabwärts der Schaufeln (30) gewellt (60) oder gezahnt (84, 82) ausgeführt ist.

4. Diffusor-Gleichrichter-Anordnung nach Anspruch 1, 2 oder 3, **dadurch gekennzeichnet, dass** die beiden Wände des Gleichrichters stromabwärts der Schaufeln (30) gewellt (60, 64, 74, 76) oder gezahnt (82, 84) ausgeführt ist.

5. Diffusor-Gleichrichter-Anordnung nach Anspruch 3 oder 4, **dadurch gekennzeichnet, dass** die Wellen des stromabwärtigen Abschnitts der Wand bzw. der Wände des Gleichrichters (18) gegenüber radial verlaufenden Ebenen, welche die Schaufeln (30) verlängern, symmetrisch ausgeführt sind.

6. Diffusor-Gleichrichter-Anordnung nach Anspruch 3 oder 4, **dadurch gekennzeichnet, dass** die Wellen des stromabwärtigen Abschnitts der Wand bzw. der Wände des Gleichrichters (18) gegenüber radial verlaufenden Ebenen, welche die Schaufeln (30) verlängern, asymmetrisch ausgeführt sind.

7. Diffusor-Gleichrichter-Anordnung nach Anspruch 6, **dadurch gekennzeichnet, dass** die Wellen sich spiralförmig um die Achse des Kompressors unter einem Steigungswinkel erstrecken, der einem Restdrehwinkel oder Abreißwinkel des Luftstroms am Auslass der Schaufeln des Gleichrichters entspricht.

8. Diffusor-Gleichrichter-Anordnung nach einem der Ansprüche 3 bis 7, **dadurch gekennzeichnet, dass** die Wellen der stromabwärtigen Abschnitte der Wände des Gleichrichters (18) sinusförmig, gezahnt, kreisbogenförmig oder V-förmig sind.

9. Diffusor-Gleichrichter-Anordnung nach einem der Ansprüche 3 bis 8, **dadurch gekennzeichnet, dass** die Wellen der stromabwärtigen Wände des Gleichrichters für beide Wände identisch (60, 64) oder von gleicher Art oder unterschiedlich von einer Wand zur anderen sind.

10. Diffusor-Gleichrichter-Anordnung nach einem der vorangehenden Ansprüche, **dadurch gekennzeichnet, dass** der Gleichrichter einstückig oder durch Schweißen bzw. mechanisches Schweißen hergestellt ist.

11. Turbomaschine bzw. Turbotriebwerk, wie etwa Turbostrahltriebwerk, Turbopropellertriebwerk oder Hubschraubertriebwerk, **dadurch gekennzeichnet, dass** sie bzw. es eine Diffusor-Gleichrichter-Anordnung nach einem der Ansprüche 1 bis 10 aufweist.

## Claims

1. A diffuser-nozzle assembly (12) for mounting at the outlet from a compressor in a turbomachine, the assembly comprising a nozzle (18) having two substantially cylindrical walls, a radially inner wall (26) and a radially outer wall (28) that are connected together by radial vanes (30), the assembly being **characterized in that** the walls of the nozzle are extended downstream beyond the radial vanes (30) and the radial spacing therebetween varies circumferentially downstream from the vanes (30) in such a manner as to be at a minimum substantially in register with the vanes (30) and at a maximum between the vanes (30), the radial spacing increases progressively to the downstream ends of the downstream walls of the nozzle.

2. A diffuser-nozzle assembly according to claim 1, **characterized in that** the walls of the nozzle (58, 60) diverge going downstream from the vanes (30).

3. A diffuser-nozzle assembly according to claim 1 or claim 2, **characterized in that** at least one of the walls of the nozzle is corrugated (60) or crenellated (84, 82) downstream from the vanes (30).

4. A diffuser-nozzle assembly according to claim 1, 2, or 3, **characterized in that** both walls of the nozzle are corrugated (60, 64, 74, 76) or crenellated (82, 84) downstream from the vanes (30).

5. A diffuser-nozzle assembly according to claim 3 or claim 4, **characterized in that** the corrugations of the downstream portion(s) of the wall(s) of the nozzle (18) are symmetrical relative to radial planes extending the vanes (30).

6. A diffuser-nozzle assembly according to claim 3 or claim 4, **characterized in that** the corrugations of the downstream portion(s) of the wall(s) of the nozzle (18) are asymmetrical relative to radial planes extending the vanes (30).

7. A diffuser-nozzle assembly according to claim 6, **characterized in that** the corrugations extend helically around the axis of the compressor with a helix angle corresponding to a residual angle of gyration or to a separation angle of the air stream at the outlets from the vanes of the nozzle.

8. A diffuser-nozzle assembly according to any one of claims 3 to 7, **characterized in that** the corrugations of the downstream portions of the walls of the nozzle (18) are sinusoidal, crenellated, in the form of circular arcs, or in the form of V-shapes.

9. A diffuser-nozzle assembly according to any one of claims 3 to 8, **characterized in that** the corrugations of the downstream walls of the nozzle are identical (60, 64) or of the same type for both walls, or of a type that differs from one wall to the other.

10. A diffuser-nozzle assembly according to any preceding claim, **characterized in that** the nozzle is a single piece or is assembled by welding or machine brazing.

11. A turbomachine, such as a turbojet, a turboprop, or a helicopter engine, **characterized in that** it includes a diffuser-nozzle assembly according to any one of claims 1 to 10.
